Europäisches Patentamt

European Patent Office

Office européen des brevets

(11) Veröffentlichungsnummer: **0 502 380 A2**

# EUROPÄISCHE PATENTANMELDUNG

(21) Anmeldenummer: **92102941.9**

(22) Anmeldetag: **21.02.92**

(51) Int. Cl.⁵: **C08K 7/08**

(30) Priorität: **02.03.91 DE 4106656**

(43) Veröffentlichungstag der Anmeldung:
**09.09.92 Patentblatt 92/37**

(84) Benannte Vertragsstaaten:
**AT BE CH DE FR GB IT LI NL**

(71) Anmelder: **BASF Aktiengesellschaft**
**Carl-Bosch-Strasse 38**
**W-6700 Ludwigshafen(DE)**

(72) Erfinder: **Fisch, Herbert, Dr.**
**In der Eselsweide 8**
**W-6706 Wachenheim(DE)**
Erfinder: **Sterzel, Hans-Josef, Dr.**
**Wasgauring 3**
**W-6701 Dannstadt-Schauernheim(DE)**
Erfinder: **Schwab, Ekkehard, Dr.**
**Berwartsteinstrasse 4**
**W-6730 Neustadt(DE)**
Erfinder: **Koerner, Reinhard, Dr.**
**Am Graben 20**
**W-6444 Wildeck(DE)**

(54) **Verbundwerkstoffe aus Kunststoffen und Eisenoxid-Fasern.**

(57) Die Erfindung betrifft Verbundwerkstoffe aus Kunststoffen und Eisenoxidfasern mit einem Durchmesser von weniger als 1000 nm.

Die Erfindung betrifft Verbundwerkstoffe aus thermoplastischen oder duroplastischen Kunststoffen und Verstärkungsfasern.

Zur Verstärkung von Kunststoffen werden diese mit faserförmigern Zusatzstoffen abgemischt. Die gängigsten Verstärkungsfasern sind Glasfasern, es werden aber auch kristalline anorganische Fasern, z.B. auf der Basis von Titanaten, Aluminiumoxid oder Siliciumcarbid eingesetzt, wodurch die Steifigkeit und Festigkeit erheblich verbessert wird. Grundsätzlich besteht aber das Bedürfnis, diese beiden Eigenschaften noch weiter zu steigern.

Eisenoxidfasern, sowie Verfahren zu ihrer Herstellung sind grundsätzlich bekannt. Sie wurden aber wegen ihrer hohen Dichte bisher noch nicht als Verstärkungsfasern für Kunststoffe eingesetzt, außerdem wurde die Einarbeitung in Kunststoffe wegen ihrer geringen Größe bisher für recht schwierig gehalten.

Der Zusatz von Eisenoxidpulver in sphärischer Form als Pigment zu Kunststoffen ist bekannt. Werden derartige Pulver als Füllstoffe zur Verbesserung der mechanischen Eigenschaften zugesetzt, dann müssen verhältnismäßig große Mengen verwendet werden, um eine ausreichende Erhöhung von Festigkeit und Steifigkeit zu erzielen.

Der Erfindung lag die Aufgabe zugrunde, Verbundwerkstoffe mit extrem hoher Steifigkeit und Festigkeit bereitzustellen.

Es wurde gefunden, daß diese Aufgabe gelöst wird, wenn man als Verstärkungsfasern Eisenoxidfasern mit einem Durchmesser von weniger als 1000 nm verwendet.

Geeignete thermoplastische Kunststoffe sind z.B. Polyethylen, Polypropylen, Blockcopolymere des Polyethylens bzw. Polypropylens, Polybuten-1, Poly(-4-methylpenten-1), Polyvinylchlorid, Polystyrol, Styrol-Acrylnitril-Copolymere, Styrol-Acrylnitril-Butadien-Copolymere, Acrylnitril-Styrol-Acrylester-Copolymere, Polyoximethylen, thermoplastische Tetrafluorethylencopolymere, Polyamide, Polycarbonate, Polyester, Polyphenylenether,Polyetherketone, Polysulfon, Polyethersulfon, Polyphenylensulfid, Polyetherimide, flüssigkristalline Polyester, thermoplastische Polyurethane, sowie Mischungen dieser Thermoplasten.

Geeignete duroplastische Kunststoffe sind z.B. Härtungsprodukte von Phenol-Formaldehyd-Harzen, Melamin-Formaldehyd-Harzen, Harnstoff-Formaldehyd-Harzen, ungesättigten Polyesterharzen, Epoxidharzen, Vinylester-Harzen, Vinylesterurethan-Harzen und Phthalat-Harzen.

Bevorzugte Eisenoxide sind $\alpha$-$Fe_2O_3$, $\gamma$-$Fe_2O_3$ und $Fe_3O_4$. Die Eisenoxide liegen in Form von Fasern mit einem Durchmesser von weniger als 1000 nm, vorzugsweise von 1 bis 150 nm und insbesondere von 5 bis 100 nm vor. Es hat sich gezeigt, daß mit sinkendem Faserdurchmesser die Bruchfestigkeit und Zähigkeit, insbesondere die Kerbschlagzähigkeit der Verbundwerkstoffe zunimmt. Das Verhältnis Länge zu Durchmesser der Fasern beträgt vorzugsweise 3 : 1 bis 100 : 1, insbesondere 4 : 1 bis 80 : 1.

Für die Herstellung der erfindungsgemäß eingesetzten faserförmigen Eisenoxidpigmenten sind eine Vielzahl von Herstellverfahren bekannt. So beschreibt die DE-B 12 04 644 das sogenannte basische Verfahren zur Herstellung von Goethit, während die DE-B 11 76 111 oder auch die GB-A 2 111 471 das sogenannte saure Verfahren zur Goethitsynthese umfassen. Anstelle von Goethit kann auch Lepidokrokit als Ausgangsmaterial für die Herstellung der erfindungsgemäß eingesetzten Oxide verwendet werden. Die Herstellung dieses Materials kann beispielsweise gemäß US-A 4 176 172 erfolgen. Die Konvertierung der Eisenoxidhydrate in die erfindungsgemäßen faserförmigen Eisenoxide läßt sich z.B. gemäß DE-A 23 52 440 durchführen. Schließlich sind als Verstärkungsmaterialien im Sinne der Erfindung auch direkt synthetisierte, nadelförmige $\alpha$-Eisenoxidpigmente mit besonders hohem Länge zu Durchmesser-Verhältnis gemäß EP-A 237 944 geeignet.

Die Fasern sind im Verbundwerkstoff vorzugsweise in Mengen von 1 bis 60, insbesondere von 5 bis 40 Vol.-% enthalten. Neben den Fasern können die Verbundwerkstoffe noch weitere übliche Zusatzstoffe enthalten, wie z.B. Antioxydantien, Flammschutzmittel, Keimbildner und Farbpigmente.

Beim Einarbeiten der Eisenoxidfasern in die Kunststoffmatrix ist darauf zu achten, daß die Fasern möglichst weitgehend desagglomeriert sind, weil nur dann eine homogene Verteilung in der Matrix erhalten wird und bruchauslösende Agglomerate unwirksam sind.

Methoden zur Desagglomerierung von feinen Partikeln sind bekannt, z.B. durch kräftiges Zerteilen in einer Dispersion. So kann man z.B. eine Dispersion der Eisenoxidfasern in wäßriger oder organischer Phase herstellen, wobei der Fasergehalt zwischen 4 und 65, insbesondere zwischen 10 und 50 Gew.-% betragen kann. Dabei können übliche Dispergatoren, z.B. Polyacrylsäure, Maleinsäure/Styrol-Copolymerisate, oder Copolymerisate aus Natriummaleinat und Diisobuten im Falle einer wäßrigen Dispersion Hydroxystearinsäurederivate oder $C_{13}$-$C_{15}$-Oxoalkohole im Falle einer Dispersion in Benzylalkohol, jeweils in Mengen von 0,1 bis 5 Gew.-% zugesetzt werden. Das Desagglomerieren kann durch kontinuierliches Mahlen in Rührwerks-Kugelmühlen oder anderen stark scherenden Aggregaten, die nach dem Rotor/Stator-Prinzip arbeiten, vorgenommen werden.

Anschließend kann das Dispersionsmittel z.B. durch Sprühtrocknen entfernt und die erhaltenen Fasern können dann in die Kunststoffschmelze- oder Flüssigkeit eingearbeitet werden, wobei übliche Mischaggregate, z.B. Extruder oder Kneter verwendet werden können. Im Falle von Duroplasten schließt sich dann der Härtungsvorgang an.

Zur Einarbeitung von Fasern in Duroplaste kann man die Faserdispersion direkt in die Kunststoffschmelze, z.B. über eine Flüssigkeitsdosierung einarbeiten und anschließend das Dispergiermittel entgasen.

Die erfindungsgemäßen Verbundwerkstoffe zeichnen sich durch hervorragende Steifigkeit, Zähigkeit und Festigkeit aus, wobei diese guten Eigenschaften auch schon bei verhältnismäßig niedrigen Füllstoffgehalten erzielt werden.

Sie können z.B. als Spritzgußmassen, Extrusionsmassen für Profile und Folien oder zum Blasformen verwendet werden.

Beispiel 1

Kombination Polyamid/alpha-$Fe_2O_3$

Getrocknetes, desagglomeriertes $\alpha$-$Fe_2O_3$ Pulver (Faserlänge: 700 nm, Faserdurchmesser: 40 nm) wird mit einem Massenstrom von 5 kg/h über einen feststoffseitenextruder zu einer Polyamid-6-Schmelze (K-Wert nach DIN 53 727 (Massestrom 5 kg/h) zugefahren. Das nach Homogenisierung und Extrusion erhaltene Granulat weist einen Feststoffgehalt von 7,7 Vol.-% $\alpha$-$Fe_2O_3$ auf.

Beispiel 2

Kombination Polypropylen/$Fe_3O_4$

Getrocknetes, desagglomeriertes $Fe_3O_4$-Pulver (Faserlänge: 800 nm, Faserdurchmesser: 35 nm) wird mit einem Massenstrom von 5 kg/h über einen Feststoffseitenextruder zu einer Polypropylen-Schmelze (MFI 230/2,16; Massestrom 5 kg/h) zugefahren. Das nach Homogenisierung und Extrusion erhaltene Granulat weist einen Feststoffgehalt von 6,1 Vol.-% $Fe_3O_4$ auf.

Beispiel 3

Kombination Polyethersulfon/$\alpha$-$Fe_2O_3$

Getrocknetes, desagglomeriertes $\gamma$-$Fe_2O_3$-Pulver (Faserlänge: 800 nm, Faserdurchmesser: 35 nm) wird mit einem Massenstrom von 5 kg/h über einen Feststoffseitenextruder bei einer Extrudertemperatur von 305°C zu einer Polyethersulfon-Schmelze (Massestrom 5 kg/h) zugefahren. Das nach Homogenisierung und Extrusion erhaltene Granulat weist einen Feststoffgehalt von 18 Vol.-% $\gamma$-$Fe_2O_3$ auf.

Beispiel 4

Kombination Polyamid 6/$\alpha$-$Fe_2O_3$

Eine Dispersion von 35 Gew.-% nadelförmigem $\alpha$-$Fe_2O_3$ (Länge: 900 nm, Dicke: 40 nm in Benzylalkohol wird unter Zusatz von 0,35 Gew.-% Polyhydroxystearinsäure als Dispergator mittels einer Rührwerkskugelmühle 1 h desagglomeriert. Diese Dispersion wird mit einem Volumenstrom von 6 l/h in der zweiten Stufe eines Doppelwellenextruders mit einer in der ersten Stufe erzeugten Polyamid-6-Schmelze mit einem Massenstrom von 5 kg/h bei 280°C durchmischt. Das eingesetzte Polyamid ist durch einen K-Wert von 80 (DIN 53 727 charakterisiert. Anschließend an die Mischzone an werden in der Entgasungszone 5,5 l/h Benzylalkohol bei 30 mbar abdestilliert. Man erhält ein Granulat mit einem Gehalt von 11 Vol.-% an $\alpha$-$Fe_2O_3$.

Beispiel 5:

Kombination Polyamid 6/$\gamma$-$Fe_2O_3$

In destilliertem Wasser wird nadelförmiges $\gamma$-$Fe_2O_3$ mit einem Gehalt von 35 Gew.-% unter Zusatz von 0,2 Gew.-% Natriumpolyacrylat als Dispergator mittels einer Rüchrwerkskugelmühle 1 h desagglomeriert. Diese Dispersion wird mit einem Volumenstrom von 6 l/h in der zweiten Stufe eines Doppelwellenextruders mit einer in der ersten Stufe erzeugten Polyamid-6-Schmelze mit einem Massenstrom von 5 kg/h bei 280°C durchmischt. Das eingesetzte Polyamid ist durch einen K-Wert von 80 (DIN 53 727) charakterisiert. Anschließend an die Mischzone an werden in der Entgasungszone 5,5 l/h Wasser bei 25 mbar abdestilliert. Man erhält ein Granulat mit einem Gehalt von 11 Vol.-% an $\gamma$-$Fe_2O_3$.

Beispiel 6

Kombination Polyamid 6/$Fe_3O_4$

In Benzylalkohol wird nadelförmiges $Fe_3O_4$ (Länge: 800 nm, Dicke: 30 nm) mit einem Gehalt von 35 Gew.-% unter Zusatz von 0,5 Gew.-% Polyhydroxystearinsäure als Dispergators mittels einer Rührwerkskugelmühle 1 h desagglomeriert. Diese Dispersion wird mit einem Volumenstrom von 8 l/h in der zweiten Stufe eines Doppelwellenextruders mit einer in der ersten Stufe erzeugten Polyamid-6-Schmelze mit einem Massenstrom von 5 kg/h bei 280°C durchmischt. Das eingesetzte Polyamid ist durch einen K-Wert von 80 (DIN 53 727) charakterisiert. Anschließend an die Mischzone an werden in der Entgasungszone 5,5 l/h Benzylalkohol bei 30 mbar abdestilliert. Man erhält ein Granulat mit einem Gehalt von 11 Vol-% an $Fe_3O_4$.

Vergleichsbeispiel 1

Kombination Polyamid/$\alpha$-$Fe_2O_3$

Getrocknetes desagglomeriertes sphärisches $\alpha$-$Fe_2O_3$ (Partikelgröße 100 nm) wird mit einem Massenstrom von 2,8 kg/h über einen Feststoffseitenextruder zu einem Polyamid-6-Schmelze (k-Wert nach DIN 53 727: 80; Massestrom 5 kg/h) zugefahren, das nach Homogenisierung und Extrusion erhaltene Granulat weist einen Feststoffgehalt von 11 Vol.-% am sphärischem $\alpha$-$Fe_2O_3$ auf.

Vergleichsbeispiel 2

Kombination Polyamid 6/$Fe_3O_4$

In Benzylalkohol wird sphärisches $Fe_3O_4$ (Partikelgröße 80 nm) mit einem Gehalt von 35 Gew.-% unter Zusatz von 0,2 Gew.-% Polyhydroxystearinsäure als Dispergators mittels einer Rührwerkskugelmühle 1 h desagglomeriert. Diese Dispersion wird mit einem Volumenstrom von 8 l/h in der zweiten Stufe eines Doppelwellenextruders mit einer in der ersten Stufe erzeugten Polyamid-6-Schmelze mit einem Massenstrom von 5 kg/h bei 280°C durchmischt. Das eingesetzte Polyamid ist durch einen K-Wert von 80 (DIN 53 727) charakterisiert. Anschließend an die Mischzone an werden in der Entgasungszone 6 l/h Benzylalkohol bei 30 mbar abdestilliert. Man erhält ein Granulat mit einem Gehalt von 14 Vol.-% an $Fe_3O_4$.

Vergleichsbeispiel 3

Kombination Polyamid 6/Glasfaser

Durch Compoundierung mittels eines Doppelwellenextruders wird Polyamid-6 mit Glasfasern bei 280°C vermischt. Der Faseranteil im compoundierten Polymeren beträgt 11 Vol.-%, das Maximum des Faserdurchmesser liegt bei 15.000 nm, die mittlere Länge 200 000 nm.

Mechanische Daten der erhaltenen Verbunde

Die getrockneten Granulate wurden mit einer Schneckenspritzmaschine für die Zugprüfung nach DIN 53455 (Festigkeit) und DIN 53457 (Steifigkeit, E-Modul) hergestellt. Die Massetemperatur betrug bei den verspritzten Polyamid-6-Verbunden 260°C.

In der folgenden Tabelle sind die Meßergebnisse aufgeführt:

| Beispiel | Füllstoff | Faseranteil Vol.-% | Zugfestigkeit MPa | E-Modul GPa |
|---|---|---|---|---|
| 4 | $\alpha$-$Fe_2O_3$ | 11 | 212 | 19,5 |
| 5 | $\gamma$-$Fe_2O_3$ | 11 | 223 | 20 |
| 6 | $Fe_3O_4$ | 11 | 244 | 20,5 |
| Vergleich 1 | $\alpha$-$Fe_2O_3$ | 11 | 142 | 7,1 |
| Vergleich 2 | $Fe_3O_4$ | 14 | 140 | 7 |
| Vergleich 3 | Glas | 11 | 165 | 13 |

**Patentansprüche**

1. Verbundwerkstoffe aus Kunststoffen und Verstärkungsfasern, dadurch gekennzeichnet, daß die Fasern Eisenoxidfasern mit einem Durchmesser von weniger als 1000 nm sind.

2. Verbundwerkstoffe nach Anspruch 1, dadurch gekennzeichnet, daß die Kunststoffe Thermoplasten sind.

3. Verbundwerkstoffe nach Anspruch 1, dadurch gekennzeichnet, daß die Kunststoffe Duroplasten sind.

4. Verbundwerkstoffe nach Anspruch 1, dadurch gekennzeichnet, daß die Fasern ein Verhältnis Länge zu Durchmesser von 3 : 1 bis 100 : 1 aufweisen.

5. Verbundwerkstoffe nach Anspruch 1, dadurch gekennzeichnet, daß sie 1 bis 60 Vol.-% Eisenoxidfasern enthalten.

6. Verbundwerkstoffe nach Anspruch 1, dadurch gekennzeichnet, daß die Eisenoxide $Fe_2O_3$ oder $Fe_3O_4$ sind.